(19) Europäisches Patentamt

European Patent Office

Office européen des brevets

(11) Veröffentlichungsnummer : **0 294 547 B1**

(12) **EUROPÄISCHE PATENTSCHRIFT**

(45) Veröffentlichungstag der Patentschrift :
24.04.91 Patentblatt 91/17

(51) Int. Cl.$^5$ : **B23B 31/24**

(21) Anmeldenummer : 88104824.3

(22) Anmeldetag : 25.03.88

(54) Umlaufender Spannzylinder für Kraftspannfutter.

(30) Priorität : 06.06.87 DE 3719102

(43) Veröffentlichungstag der Anmeldung :
14.12.88 Patentblatt 88/50

(45) Bekanntmachung des Hinweises auf die
Patenterteilung :
24.04.91 Patentblatt 91/17

(84) Benannte Vertragsstaaten :
**DE FR GB IT**

(56) Entgegenhaltungen :
**DD-A- 240 856**
**DE-A- 2 614 549**
**DE-A- 3 004 988**
**DE-A- 3 117 850**
**DE-C- 3 228 749**

(73) Patentinhaber : **SMW Schneider & Weisshaupt GmbH**
**Wiesentalstrasse 28**
**W-7996 Meckenbeuren (DE)**

(72) Erfinder : **Heisel, Alois**
**Welfenstrasse 18**
**W-7990 Friedrichshafen (DE)**

(74) Vertreter : **Engelhardt, Guido, Dipl.-Ing.**
**Patentanwalt Montafonstrasse 35 Postfach 1350**
**W-7990 Friedrichshafen 1 (DE)**

## Beschreibung

Die Erfindung bezieht sich auf einen umlaufenden Spannzylinder für Kraftspannfutter oder dgl., dessen Spannkolben mit den Spannbacken des Kraftspannfutters trieblich verbunden und dem eine Überwachungseinrichtung in Form eines Wegmessgerätes zugeordnet ist, dessen Signalaufnehmer in Abhängigkeit von der jeweiligen Stellung des Spannkolbens durch eine Schaltstange als Weggeber betätigbar und die zur Auswertung der abgegebenen Signale an ein Steuergerät angeschlossen ist.

Durch die DE-OS 31 05 872 ist eine Einrichtung dieser Art zur Bestimmung des Arbeitsbereiches eines doppeltwirkenden Spannzylinders zur Betätigung von Spanneinrichtungen an Werkzeugmaschinen bekannt. Die Schaltstange ist bei dieser Ausgestaltung an dem Spannkolben angebracht und rotiert somit zusammen mit diesem. Um jedoch die Drehbewegung der Schaltstange nicht auf den beweglichen Teil des Wegmessgerätes zu übertragen, ist an deren Ende ein Kugellager angebracht, dessen Außenring in einer verschiebbaren aber drehfest gehaltenen Hülse arretiert ist. Über eine an der Hülse angebrachte Stange wird die Verstellbewegung der Hülse und damit die Verstellbewegung des Spannkolbens dem Wegmeßgerät zugeführt.

Obwohl somit eine Überwachung der jeweiligen Stellung des Spannkolbens möglich ist, sind dennoch oftmals Fehlmessungen in Kauf zu nehmen, da die Schwingungen, denen der an der Maschinenspindel befestigte Spannzylinder unterworfen ist, von der rotierenden Schaltstange über die diese abstützende Hülse auf das Wegmessgerät geleitet werden. Fehlbetätigungen sind demnach vielfach die Folge. Außerdem muß die Durchführung der Schaltstange abgedichtet werden. Der Bauaufwand ist demnach bei dieser Überwachungsvorrichtung beträchtlich, eine zufriedenstellende Betriebsweise ist dennoch mitunter nicht gegeben.

Aufgabe der Erfindung ist es daher, einen umlaufenden Spannzylinder für Kraftspannfutter der vorgenannten Gattung mit Überwachungseinrichtung zu schaffen, bei dem es nicht nur auf einfache Weise möglich ist, jederzeit die jeweilige Betriebsstellung des Spannkolbens und somit auch der Spannbacken exakt ermitteln zu können, sondern bei dem auch Betriebsstörungen weitgehend vermieden und eine hohe Betriebssicherheit insbesondere der Überwachungseinrichtung gegeben sind. Der dazu erforderliche Bauaufwand soll gering gehalten werden, dennoch soll jedoch eine hohe Meßgenauigkeit gewährleistet sein, so daß die Funktion des Spannfutters an die jeweiligen Gegebenheiten, beispielsweise den Durchmesser eines einzuspannenden Werkstückes, ohne Schwierigkeiten anzupassen.

Gemäß der Erfindung wird dies dadurch erreicht, daß die auf die Überwachungseinrichtung einwirkende Schaltstange drehbar in dem Spannkolben gelagert und gegenüber dem Spannzylinder drehfest gehalten ist.

Zweckmäßig ist es hierbei, zur Lagerung der Schaltstange den Spannkolben auf der der Kolbenstange gegenüberliegenden Seite mit einem Ansatzstück, vorzugsweise gleichen Durchmessers zu versehen, in dem die Schaltstange in einer Ausnehmung beispielsweise mittels eines Wälzlagers abgestützt ist.

Angebracht ist es ferner, daß die Schaltstange einen dem Spannzylinder zugeordneten und konzentrisch zu diesem angeordneten Verteilerring zur Übertragung des Druckmittels durchgreift und daß an dem freien Ende des Verteilerringes der Signalgeber und-/oder der mit diesem zusammenwirkende Meßwertaufnehmer der Überwachungseinrichtung angeordnet sind.

Die Schaltstange kann in einfacher Weise durch eine an diesem angearbeitete sich in Achsrichtung erstreckende Fläche und einer an dem Verteilerring angebrachte mit dieser zusammenwirkenden Scheibe verdrehsicher gehalten werden.

Sehr vorteilhaft ist es des weiteren, den Verteilerring über ein ringförmiges Zwischenstück zur Aufnahme des an dem Spannkolben angebrachten Ansatzstückes an dem den Spannkolben aufnehmenden Zylinder zu befestigen, so daß das Ansatzstück in der Zylinderwand abgedichtet und der Spannkolben mit zwei gleich groß bemessenen von dem Druckmittel zu beaufschlagenden Flächen ausgestattet werden kann.

Der Signalgeber kann in einfacher Ausgestaltung durch eine an der Schaltstange vorzugsweise an deren freien Ende angebrachte Hülse mit einer kegelförmig ausgebildeten Außenmantelfläche und der Signalaufnehmer durch einen im Verstellbereich der Hülse angeordneten Näherungsschalter gebildet werden. Nach andersartigen Ausgestaltungen kann der Signalgeber auch durch einen an der Schaltstange angebrachten Anker und der Signalaufnehmer durch eine oder zwei in deren Verstellbereich angeordnete Magnetspulen gebildet werden oder der Signalgeber kann aus einer an der Schaltstange angebrachten Verzahnung oder in dieser unmittelbar oder einem an diesem befestigten Zwischenstück eingearbeitete inkrementale Ausnehmungen und der Meßwertaufnehmer aus einem mit der Verzahnung über ein Zahnrad zusammenwirkenden Drehgeber bzw. einen mit den inkrementalen Ausnehmungen zusammenwirkenden Meßwertaufnehmer bestehen.

Nach einer weiteren Ausführungsform kann der Signalgeber durch einen in dem Ansatzstück des Spannkolbens eingesetzten, die Schaltstange umgebenden Permanentmagneten und der Signalaufnehmer durch einen Ultraschallsender und -empfänger gebildet sein, dessen Signale über eine in der ortsfest gehaltenen Schaltstange eingearbeitete Bohrung dem Permanentmagneten zuleitbar sind.

Von dem Signalgeber können rechteckige oder analoge Ausgangssignale, je nach Art der eleketronischen Steuerung, abgenommen werden.

Wird ein umlaufender mit einer Überwachungseinrichtung ausgestatteter Spannzylinder für ein Kraftspannfutter gemäß der Erfindung ausgebildet,so ist nicht nur die Möglichkeit geschaffen, jederzeit die jeweilige Betriebsstellung des Spannkolbens des Spannzylinders und damit auch der Spannbacken des Kraftspannfutters zu ermitteln und entsprechend zu reagieren, sondern es ist auch eine betriebssichere Funktion der Überwachungseinrichtung gewährleistet. Wird nämlich die auf diese einwirkende Schaltstange drehbar oder verschiebbar in dem Spannkolben gelagert und drehfest gehalten, so kann stufenlos der Verstellweg des Spannkolbens und der mit diesem trieblich verbundenen Spannbacken ermittelt werden, auch kann die jeweilige Betriebsstellung dieser Bauteile abgefragt werden, ohne daß die Schwingungen, denen der Spannzylinder zwangsläufig unterworfen ist, auf den Signalgeber und/oder den Signalaufnehmer der Überwachungseinrichtung übertragen werden. Und da die Signale des Signalgebers auswertbar sind, kann beispielsweise der Spannbereich des Spannfutters optimal eingestellt und an das jeweils einzuspannende Werkstück problemlos angepaßt werden, so daß die Spannzeiten verkürzt und der Energieaufwand reduziert werden können. Von besonderem Vorteil ist hierbei, daß die Schaltstange nicht mitrotiert und demnach keine Schwingungen weitergibt, auch ist diese nicht aus dem Druckraum herauszuführen und gesondert abzudichten. Mit der in unterschiedlicher Weise auszubildenden Überwachungseinrichtung sind demnach auch äußerst exakte Messungen möglich. Bei einfacher Handhabung ist demnach ein vielseitiger und vorteilhafter Einsatz eines mit einer gemäß der Erfindung ausgebildeten Spannzylinders gegeben.

In der Zeichnung ist ein Ausführungsbeispiel eines gemäß der Erfindung ausgebildeten umlaufenden Spannzylinders, der mit unterschiedlich gestalteten Überwachungseinrichtungen versehen ist, dargestellt und nachfolgend im einzelnen erläutert. Hierbei zeigt :

Figur 1 den Spannzylinder mit Überwachungseinrichtung in einem Axialschnitt und

Figur 2 bis 5 unterschiedliche Ausgestaltungen der Überwachungseinrichtung bei dem Spannzylinder nach Figur 1.

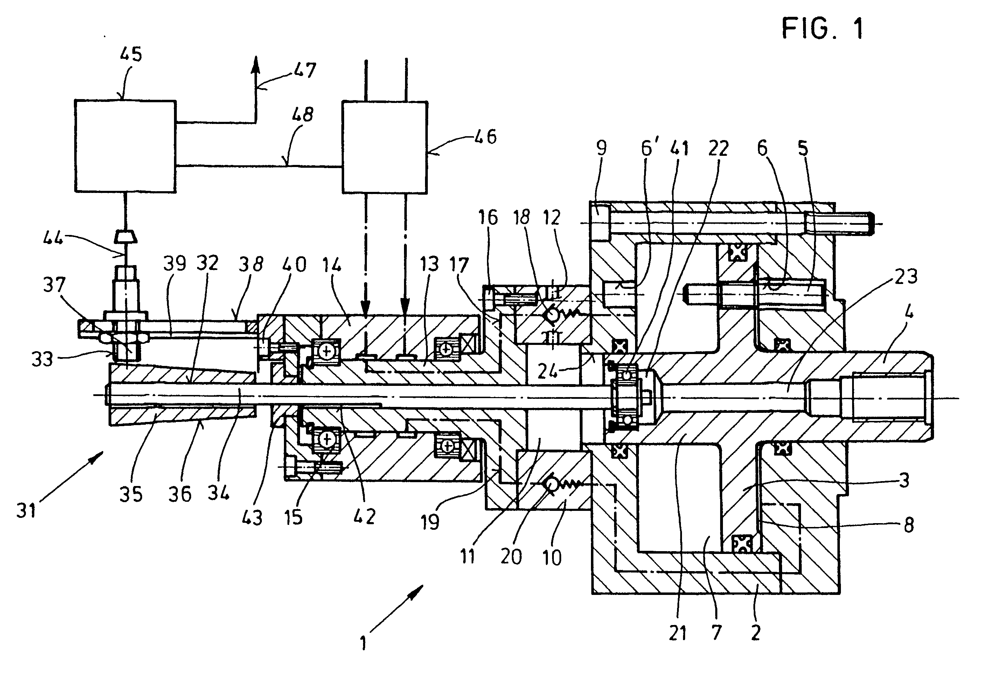

Der in Figur 1 dargestellte und mit 1 bezeichnete Spannzylinder dient zur Betätigung der Spannbacken eines nicht gezeichneten Kraftspannfutters und besteht aus einem in einem mittels Schrauben 9 an der Maschinenspindel einer Drehmaschine zu befestigenden Zylinder 2, in dem ein beiderseits von Druckmittel beaufschlagbarer Spannkolben 3 eingesetzt ist. Die Kolbenstange 4 des Spannkolbens 3, der durch einen in den Zylinder 2 eingearbeitete Ausnehmungen 6 und 6' eingreifenden Sicherungsbolzen 5 drehfest mit diesem verbunden ist, ist trieblich mit den Spannbacken des Kraftspannfutters gekoppelt.

Zur Druckmittelübertragung in die den Spannkolben 3 zugeordneten Druckräume 7 oder 8 ist ein zweiteiliger Verteilerring 13, 14 vorgesehen, dessen Teil 13 über ein Zwischenstück 10 mittels Schrauben 16 an dem Zylinder 2 angeschraubt ist und demnach zusammen mit diesem umläuft. Das Teil 14 ist dagegen ortsfest angeordnet und mittels Wälzlager 15 auf dem Teil 13 gelagert. Auf diese Weise kann Druckmittel aus dem stationären Teil 14 in das rotierende Teil 13 des Verteilerringes geleitet und über Druckleitungen 17 und 19, die jeweils mit einem Steuerventil 18 bzw. 20 ausgestattet sind, in die Druckräume 7 bzw. 8 geleitet werden.

Der Spannkolben 3 ist auf der der Kolbenstange 4 gegenüberliegenden Seite mit einem Ansatzstück 21 versehen, das in einer Bohrung 24 des Zylinders 2 gelagert und abgedichtet ist und bei einer Verschiebung des Spannkolbens 3 nach links in den durch das Zwischenstück 10 gebildeten Freiraum 11, der mit einer Entlüftungsbohrung 12 versehen ist, eingeführt wird. Das Ansatzstück 21 weist hierbei den gleichen Durchmesser auf wie die Kolbenstange 4 des Spannkolbens 3, so daß dessen von dem Druckmittel beaufschlagte Druckflächen gleich groß bemessen sind und demnach in den beiden Spanneinrichtungen bei gleichen Spannmitteldruck jeweils gleich bemessene Spannkräfte, ohne daß besondere Vorkehrungen zu treffen sind, gegeben sind.

Um jede Betriebsstellung des Spannkolbens 3 und der mit diesem zwangläufig verbundenen Spannbacken des Kraftspannfutters auf einfache Weise jederzeit ermitteln zu können, ist der Spannzylinder 1 mit einer Überwachungseinrichtung 31 ausgestattet, die eine stufenlose Überwachung und Einstellung des Verstellweges des Spannkolbens 3 ermöglicht. Über eine Steuerleitung 44 ist die Überwachungseinrichtung 31 an ein elektronisches Steuergerät 45 angeschlossen, das über eine Steuerleitung 47 mit der Steuereinrichtung der Drehmaschine und über eine Steuerleitung 48 mit einem dem Spannzylinder 1 zugeordneten Steuergerät 46, mittels der die Druckmittelzuführung zu regeln ist, in Verbindung steht. Auf diese Weise kann nicht nur die Drehmaschine, sondern auch die Druckmittelzuführung beeinflußt werden.

Die Überwachungseinrichtung 31 besteht bei dem Ausfühbeispiel nach Figur 1 aus einem Weggeber 32 in Form einer Schaltstange 34 und einer auf dieser angeordneten mit einer kegelig ausgebildeten Außenmantelfläche 36 ausgestatteten Hülse 35 sowie einem durch einen Näherungsschalter 37 gebildeten Signalaufnehmer 33. Der Näherungsschalter 37 ist hierbei in einem Langloch 39 eines mittels Schrauben 40 an dem Verteilerring 13, 14 befestigten Halters 38 angebracht, so daß eine Verstellung ohne weiteres zu bewerkstelligen ist. Da der jeweilige Abstand zwischen der kegeligen Außenmantelfläche 36 der mit dem Spannkolben 3 über die Schaltstange 34 zwangläufig verbundenen Hülse 35 und dem Näherungsschalter 37 abhängig ist von der jeweiligen Betriebsstellung des Spannkolbens 3, können ohne Schwierigkeiten dessen Betriebsstellungen und somit auch die Betriebsstellungen der Spannbacken ermittelt und ausgewertet werden. Mit Hilfe des Steuergerätes 45 kann in Abhängigkeit somit von der Stellung der Spannbacken die Steuerung der Drehmaschinen und/oder das Steuergerät 46 des Spannzylinders 1 beeinflußt werden.

Die Schaltstange 34 ist hierbei mittels eines Lagers 41 in einer in das Ansatzstück 21 des Spannkolbens 3 eingearbeiteten Ausnehmung 22 drehbar gegenüber diesem abgestützt, auch ist diese durch eine an den Verteilerring 13, 14 angeschraubte Scheibe 43, die sich an einer an der Schaltstange 34 angearbeiteten Fläche 42 abstützt, drehfest gehalten. Durch von dem Spannzylinder 1 ausgehende Schwingungen wird demnach der Näherungsschalter 37 durch die nur in axialer Richtung bewegte Schaltstange 34 nicht ungünstig beeinlußt. Über eine in das Ansatzstück 21 und die Kolbenstange 4 eingearbeitete Bohrung 23 kann im Bedarfsfall bei ausgebauter Schalt-34 dem Kraftspannfutter Schmiermittel zugeführt werden.

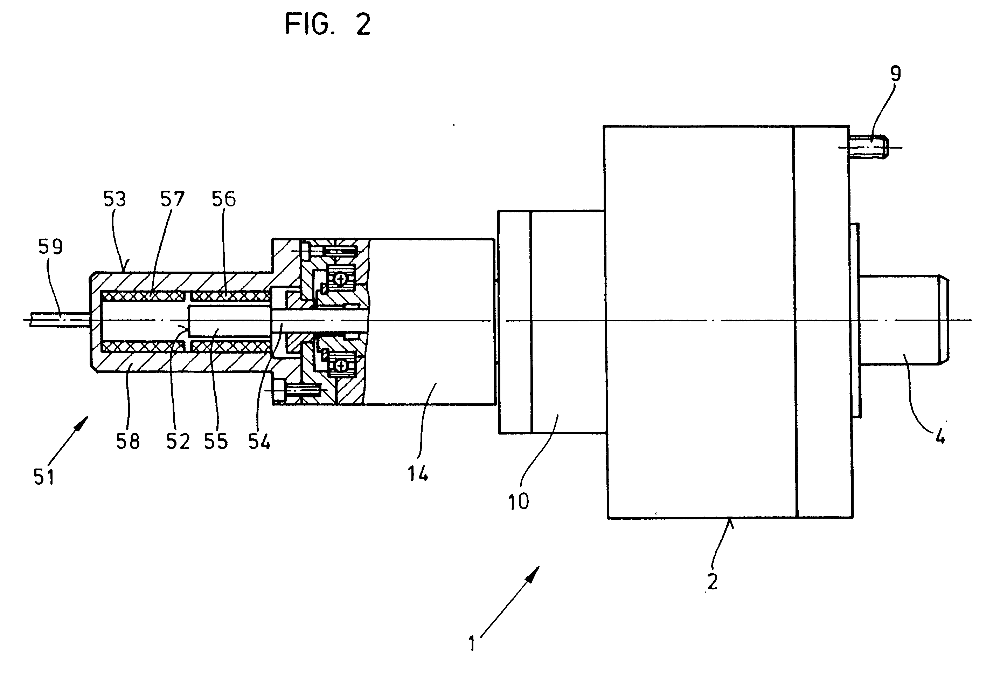

Die in Figur 2 dargestellte Überwachungseinrichtung 51 besteht ebenfalls aus einem Weggeber 52 und einem Signalaufnehmer 53. Als Weggeber 52 dient wiederum eine mit dem Spannkolben 3 verbundene Schaltstange 54 sowie ein an dieser angebrachter Anker 55. Und als Signalaufnehmer 53 sind zwei in einem Gehäuse 58 eingesetzte Magnetspulen 56 und 57 vorgesehen, denen in Abhängigkeit von der jeweiligen Stellung des Ankers 57 Signale entnehmbar und über eine Steuerleitung 59 dem elektronischen Steuergerät 45 zuführbar sind.

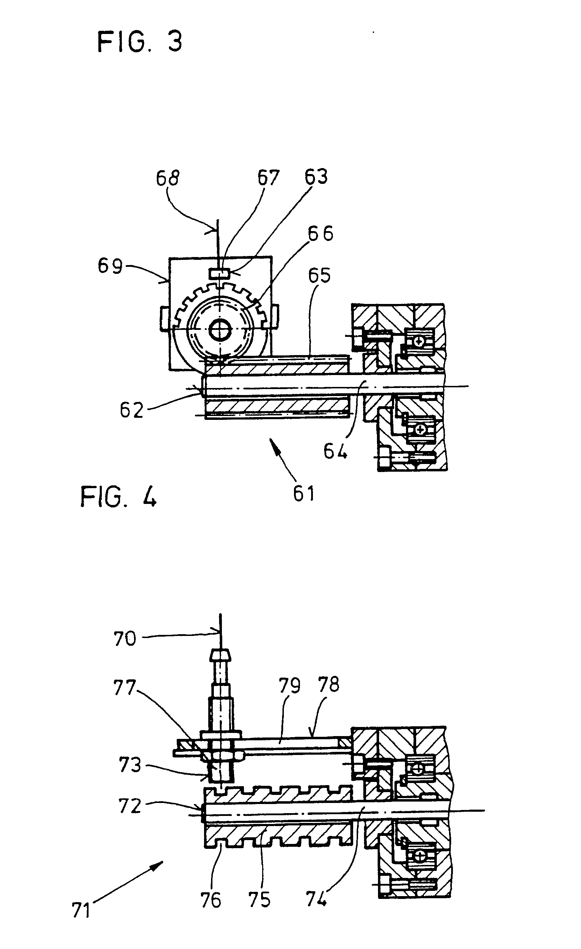

Gemäß Figur 3 ist bei der Überwachungseinrichtung 61 als Weggeber 62 ebenfalls eine axial verschiebbare mit dem Spannkolben 3 des Spannzylinders 1 verbundene Schaltstange 64 und eine an dieser angebrachte Zahnstange 65 vorgesehen, in die ein Zahnrad 66 eingreift, das mit einem in einem Gehäuse 69 eingebauten Drehgeber 67 als Signalaufnehmer 63 trieblich verbunden ist. Die axiale Verstellung des Spannkolbens 3 wird somit in eine den Drehgeber 67 beeinflussende Drehbewegung umgelenkt, die Signale des Signalaufnehmers 63 sind demnach wiederum über eine Signalleitung 68 dem elektronischen Steuergerät 45 zuführbar.

Bei dem Ausführungsbeispiel nach Figur 4 besteht die Überwachungseinrichtung 71 wiederum aus einer mit dem Spannkolben 3 verbundene Schaltstange 74 und einer auf dieser aufgesetzten mit inkrementalen Ausnehmungen 76 versehenen Hülse 75 gebildeten Weggeber 72 und einem Signalaufnehmer 73 in Form eines Schalters 77, durch den die inkrementalen Ausnehmungen 76 abgetastet werden.

Der Schalter 77 ist in einem an dem Verteilerring 13, 14 befestigten Halter 78, und zwar in einem Langloch 79 verstellbar angebracht und ist über eine Signalleitung 70 an das elektronische Steuergerät 45 angeschlossen. Die jeweilige Betriebsstellung des Spannkolbens 3 kann somit auf diese Weise ebenfalls ermittelt werden.

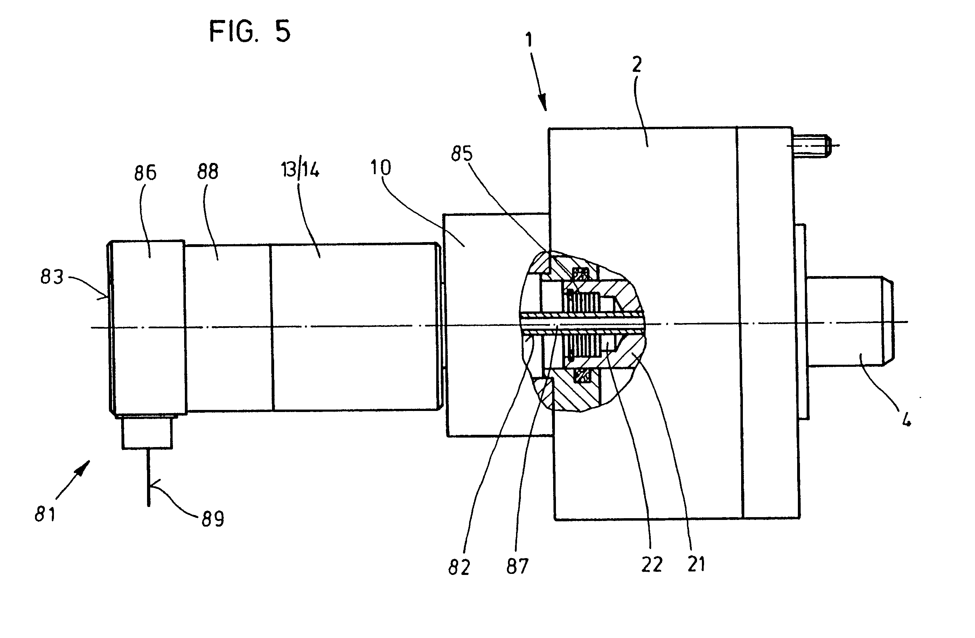

Bei der Überwachungseinrichtung 81 nach Figur 5 ist als Weggeber 82 eine mit einer Bohrung 87 ausgestattete Schaltstange 84, die in die Bohrung 23 des Spannkolbens 3 eingreift und ortsfest angeordnet ist, sowie ein Permanentmagnet 85 vorgesehen, der in die Ausnehmung 22 des Ansatzstückes 21 eingesetzt ist. Als Signalaufnehmer 83 dient ein Ultra Schallsender und -empfänger 86, der über ein Zwischenstück 88 an dem Verteilerring 13, 14 gehalten ist und über eine Signalleitung 89 mit dem Steuergerät 45 in Verbindung steht.

Von dem Signalaufnehmer 83 werden bei diesem Ausführungsbeispiel gepulste Schallwellen ausgestoßen, die von der durch die von dem Permanentmagneten 85 ausgehenden magnetischen Kraftlinien gebildeten Barriere reflektiert und wiederum aufgenommen werden. Und da der Permanentmagnet 85 zusammen mit dem Spannkolben 3 gegenüber dem Signalaufnehmer 83 verstellt wird, ist über die Laufzeit der Ultraschallwellen der Abstand zwischen dem Signalaufnehmer 83 und dem Permanentmagneten 85 und damit die Betriebsstellung des Spannkolbens 3 bestimmbar.

## Ansprüche

1. Umlaufender Spannzylinder (1) für Kraftspannfutter, dessen Spannkolben (3) mit den Spannbacken des Kraftspannfutters trieblich verbunden und dem eine Überwachungseinrichtung (31 ; 51 ; 61 ; 71 ; 81) in Form eines Wegmessgerätes zugeordnet ist, dessen Signal- aufnehmer (33, 53 ; 63 ; 73 ; 83) in Abhängigkeit von der jeweiligen Stellung des Spannkolbens (3) durch eine Schaltstange (34 ; 54 ; 64 ; 74 ; 84) als Weggeber betätigbar und die zur Auswertung der abgegebenen Signale an ein Steuergerät (45) angeschlossen ist, **dadurch gekennzeichnet,** daß die auf die Überwachungseinrichtung (31 ; 51 ; 61 ; 71 ; 81) einwirkende Schaltstange (34 ; 54 ; 64 ; 74 ; 84) drehbar in dem Spannkolben gelagert und gegenüber dem Spannzylinder (1) drehfest gehalten ist

2. Umlaufender Spannzylinder nach Anspruch 1, **dadurch gekennzeichnet,** daß zur Lagerung der Schaltstange (34 ; 54 ; 64 ; 74) der Spannkolben (3) auf der der Kolbenstange (4) gegenüberliegenden Seite mit einem Ansatzstück (21), vorzugsweise gleichen Durchmessers, versehen ist, in dem die Schaltstange (34 ; 54 ; 64 ; 74) in einer Ausnehmung (22), beispielsweise mittels eines Wälzlagers (41) abgestützt ist.

3. Umlaufender Spannzylinder nach Anspruch 1 oder 2, **dadurch gekennzeichnet,** daß die Schaltstange (34 ; 54 ; 64 ; 74 ; 84) einen dem Spannzylinder (3) zugeordneten und konzentrisch zu diesem angeordneten Verteilerring (13, 14) zur Übertragung des Druckmittels durchgreift und daß an dem freien Ende des Verteilerringes (13, 14) der Signalgeber (35 ; 55 ; 65 ; 75) und/oder der mit diesem zusammenwirkende Signalaufnehmer (33 ; 53 ; 63 ; 73 ; 83) der Überwachungseinrichtung (31 ; 51 ; 61 ; 71 ; 81) angeordnet sind.

4. Umlaufender Spannzylinder nach einem oder mehreren der Ansprüche 1 bis, **dadurch gekennzeichnet,** daß die Schaltstange (34) durch eine an dieser angearbeiteten sich in Achsrichtung erstreckenden Fläche (42) und einer an dem Verteilerring (13, 14) angebrachte mit dieser zusammenwirkenden Scheibe (43) verdrehsicher gehalten ist.

5. Umlaufender Spannzylinder nach einem oder mehreren der Ansprüche 1 bis 4, **dadurch gekennzeichnet,** daß der Verteilerring (13, 14) über ein ringförmiges Zwischenstück (10) zur Aufnahme des an dem Spannkolben (3) angebrachten Ansatzstückes (21) an dem den Spannkolben (3) aufnehmenden Zylinder (2) befestigt ist.

6. Umlaufender Spannzylinder nach einem oder mehreren der Ansprüche 1 bis 5, **dadurch gekennzeichnet,** daß der Signalgeber durch eine an der Schaltstange (34) vorzugsweise an deren freien Ende angebrachte Hülse (35) mit einer kegelförmig ausgebildeten Außenmantelfläche (36) und der Signalaufnehmer (33) durch einen im Verstellbereich der Hülse (35) angeordneten vorzugsweise in deren Achsrichtung verstellbaren Näherungsschalter (37) gebildet sind.

7. Umlaufender Spannzylinder nach einem oder mehreren der Ansprüche 1 bis 5, **dadurch gekennzeichnet,** daß der Signalgeber durch einen an der Schaltstange (54) angebrachten Anker (55) und der Signalaufnehmer (53) durch eine oder zwei in deren Verstellbereich angeordnete Magnetspulen (56, 57) gebildet sind.

8. Umlaufender Spannzylinder nach einem oder mehreren der Ansprüche 1 bis 5, **dadurch gekennzeichnet,** daß der Signalgeber durch eine an der Schaltstange (54 ; 74) angebrachte Verzahnung (Zahnstange 65) oder in diese unmittelbar oder einem an dieser befestigten Zwischenstück (Hülse 75) eingearbeitete inkrementale Ausnehmungen (76) und der Signalaufnehmer (63 ; 73) durch einen mit der Verzahnung (65) über ein Zahnrad (66) zusammenwirkenden Drehgeber (67) bzw. einen mit den inkrementalen Ausnehmungen (76) zusammenwirkenden Meßwertaufnehmer (77) gebildet sind.

9. Umlaufender Spannzylinder nach einem oder mehreren der Ansprüche 1 bis 5, **dadurch gekennzeichnet,** daß der Signalgeber durch eine in dem Ansatzstück (21) des Spannkolbens (3) eingesetzten, die Schaltstange (84) umgebenden Permanentmagneten (85) und der Signalaufnehmer (83) durch einen Ultraschallsender und -empfänger (86) gebildet sind, dessen Signale über eine in der ortsfest gehaltenen Schaltstange (84) eingearbeitete Bohrung (87) dem Permanentmagneten (85) zuleitbar sind.

10. Umlaufender Spannzylinder nach einem oder mehreren der Ansprüche 1 bis 9, **dadurch gekennzeichnet,** daß von dem Signalgeber (35 ; 55 ; 65 ; 75 ; 85) rechteckige oder analoge Ausgangssignale abnehmbar sind.

## Claims

1. Revolving clamping cylinder (1) for power chucks whose clamp piston (3) is positively connected to the jaws of the power chuck and which are fitted with a monitoring device (31 ; 51 ; 61 ; 71 ; 81) in the form of a stroke measuring device whose signal sensor (33 ; 53 ; 63 ; 73 ; 83) can be actuated as a stroke sensor by a selector shaft (34 ; 54 ; 64 ; 74 ; 84) which moves relative to the prevailing position of the clamp piston (3) and which is connected to a control unit (45) which evaluates the transmitted signals, **characterized in that** the selector shaft (34 ; 54 ; 64 ; 74 ; 84) which acts on the monitoring device (31 ; 51 ; 61 ; 71 ; 81) is mounted in the clamp piston in a revolving fixture and is rigidly mounted on the clamping cylinder (1).

2. Revolving clamping cylinder as claimed in claim 1, **characterized in that** the clamp piston (3) is provided with a projection (21) on the side opposite the piston rod (4) to enable it to locate on the selector shaft (34 ; 54 ; 64 ; 74) which is preferably of the same diameter and in which the selector shaft (34 ; 54 ; 64 ; 74) is supported in a recess (22), possibly by means of an anti-friction bearing (41).

3. Revolving clamping cylinder as claimed in claim 1 or 2, **characterized in that** the selector shaft (34 ; 54 ; 64 ; 74 ; 84) locates in a distributor ring (13, 14) allocated to, and concentrically arranged around, the clamping cylinder (3) and which transmits the pressure medium whereby a signal transmitter (35 ; 55 ; 65 ; 75) and/or a signal sensor (33 ; 53 ; 63 ; 73 ; 83) working in conjunction with it are mounted on the free end of the distributor ring (13, 14) and arranged on the monitoring device (31 ; 51 ; 61 ; 71 ; 81).

4. Revolving clamping cylinder as claimed in one or more of claims 1 to, **characterized in that** the selector shaft (34) is rigidly located by means of a surface (42) fitted to it and extending in an axial direction and of a disc (43) fitted to the distributor ring (13, 14) which works in conjunction with the surface (42).

5. Revolving clamping cylinder as claimed in one or more of claims 1 to 4, **characterized in that** the distributor ring (13, 14) is secured by means of a ring-shaped spacer element (10) which locates on the projection (21) fitted to the clamp piston (3) which in turn locates the clamp piston (3) on the clamping cylinder (2).

6. Revolving clamping cylinder as claimed in one or more of claims 1 to 5, **characterized in that** the signal transmitter is arranged preferably as a sleeve (35) with a tapered outer face (36) on the free end of the selector shaft (34) and the signal sensor (33) is an adjustable proximity switch (37) arranged preferably in the adjustment range of the sleeve (35), and preferably in its axial direction.

7. Revolving clamping cylinder as claimed in one or more of claims 1 to 5, **characterized in that** the signal transmitter is arranged as an armature (55) located on the selector shaft (54) and the signal sensor (53) is arranged as one or two magnetic coils (56, 57) located within the adjustment range of the armature (55).

8. Revolving clamping cylinder as claimed in one or more of claims 1 to 5, **characterized in that** the signal transmitter is arranged as incremental recesses (76) arranged on a spline (rack 65) located on the selector shaft (54 ; 74) or directly on the spacer element (sleeve 75) attached to this, and in that the signal sensor (63 ; 73) is arranged as an inductive sensor (67) acting through a gear (66) linked to the spline (65) or as a measured value sensor (77) acting in conjunction with the incremental recesses (76).

9. Revolving clamping cylinder as claimed in one or more of claims 1 to 5, **characterized in that** the signal transmitter is arranged as a permanent magnet (85) located on the projection (21) on the clamp piston (3) which encircles the selector shaft (84) and in that the signal sensor (83) is arranged as an ultrasonic transmitter and receiver (86) whose signals can be directed to the permanent magnet (85) via a bore (87) in the rigidly-mounted selector shaft (84).

10. Revolving clamping cylinder as claimed in one or more of claims 1 to 9, **characterized in that** square or analogue output signals can be obtained from the signal sensor (35 ; 55 ; 65 ; 75 ; 85).

**Revendications**

1. Cylindre de serrage rotatif (1) pour mandrins de serrage automatiques dont le piston de serrage (3) est lié au mors de serrage du mandrin de serrage automatique et auquel il est attribué un équipement de surveillance (31 ; 51 ; 61 ; 71 ; 81) sous la forme d'un appareil de contrôle de course dont le capteur de signal (33, 53 ; 63 ; 73 ; 83) se laisse actionner en fonction de la course respective du piston de serrage (3) par la barre de commande (34 ; 54 ; 64 ; 74 ; 84), qui est branchée sur une unité de commande (45) afin de permettre une évaluation des signaux transmis, se caractérisant par le fait que la barre de commande (34 ; 54 ; 64 ; 74 ; 84) agissant sur l'équipement de surveillance (31 ; 51 ; 61 ; 71 ; 81) tourne dans un piston de serrage tandis qu'elle est liée rigidement au cylindre de serrage (1).

2. Cylindre de serrage rotatif d'après la revendication 1, se caractérisant par le fait que pour le logement de la barre de commande (34 ; 54 ; 64 ; 74), le piston de serrage (3) est muni, sur la face opposée à la tige de piston (4), d'une embase (21) avec, de préférence, le même diamètre et dans l'évidement (22) duquel la barre de commande (34 ; 54 ; 64 ; 74) est logée moyennant un roulement à rouleaux (41).

3. Cylindre de serrage rotatif d'après la revendication 1 ou 2, se caractérisant par le fait que la barre de commande (34 ; 54 ; 64 ; 74 ; 84) passe par un anneau de distribution (13, 14) pour le transport du fluide de pression, attribué au cylindre de serrage (3) et logé concentriquement autour de celui-ci, et que le transmetteur de signal (35 ; 55 ; 65 ; 75) et/ou le capteur de signal (33 ; 53 ; 63 ; 73 ; 83) de l'équipement de surveillance (31 ; 51 ; 61 ; 71 ; 81) collaborant avec le capteur sont disposés à l'extrémité libre de l'anneau de distribution (13, 14).

4. Cylindre de serrage rotatif d'après une ou plusieurs des revendications 1 à 3, se caractérisant par le fait que la barre de commande (34) est bloquée par une surface (42) qui y est pratiquée en direction de l'axe, et par un disque (43) monté sur l'anneau de distribution (13, 14), qui collabore avec cette surface.

5. Cylindre de serrage rotatif d'après une ou plusieurs des revendications 1 à 4, se caractérisant par le fait que l'anneau de distribution (13, 14) est fixé par une pièce intermédiaire annulaire (10) destinée au logement de l'embase (21) solidaire du piston de serrage (3), au cylindre (2) logeant le piston de serrage (3).

6. Cylindre de serrage rotatif d'après une ou plusieurs des revendications 1 à 5, se caractérisant par le fait que le transmetteur de signal est formé par une douille (35) au manteau extérieur conique (36), disposée de préférence à l'extrémité libre de la barre de commande (34), et le capteur de signal (33) par un contacteur de proximité (37) disposé dans la plage de réglage de la douille (35) et réglable de préférence en direction de l'axe.

7. Cylindre de serrage rotatif d'après une ou plusieurs des revendications 1 à 5, se caractérisant par le fait que le transmetteur de signal est formé par un induit (55) monté sur la barre de commande (54) et le capteur de signal (53) par une ou deux bobines magnétiques (56, 57) montées dans leur plage de réglage.

8. Cylindre de serrage rotatif d'après une ou plusieurs des revendications 1 à 5, se caractérisant par le fait que le transmetteur de signal est formé par une denture (crémaillère 65) prévue sur la barre de commande (54 ; 74) ou par des évidements incrémentiels (76) pratiqués directement dans celle-ci ou dans une pièce intermédiaire (douille 75) intégrée dans celle-ci, et le capteur de signal (63 ; 73) par un transmetteur rotatif (67) collaborant par l'intermédiaire d'une roue dentée (66) avec la denture (65) ou un capteur de valeurs mesurées (77) collaborant avec les évidements incrémentiels (76).

9. Cylindre de serrage rotatif d'après une ou plusieurs des revendications 1 à 5, se caractérisant par le fait que le transmetteur de signal est formé par un aimant permanent (85) inséré dans l'embase (21) du piston de serrage (3) et qui entoure la barre de commande (84), et le capteur de signal (83) par un émetteur et récepteur ultrason (86) dont les signaux se laissent diriger vers l'aimant permanent par un alésage (87) pratiqué dans la barre de commande bloquée (84).

10. Cylindre de serrage rotatif d'après une ou plusieurs des revendications 1 à 9, se caractérisant par le fait que le transmetteur de signal (35 ; 55 ; 65 ; 75; 85) se prête au prélèvement de signaux rectangulaires ou analogiques.

FIG. 1

FIG. 2

EP 0 294 547 B1

FIG. 3

FIG. 4

FIG. 5